# EUROPEAN PATENT SPECIFICATION

(11) **EP 2 139 290 B1**
(45) Date of publication and mention of the grant of the patent: **07.09.2016**
(21) Application number: 08305285.2
(22) Date of filing: 19.06.2008
(51) Int. Cl.: H04W 72/06, H04W 72/10

(54) **Method in a wireless communication network to perform scheduling of resources and scheduler for a wireless communication network**
Verfahren in einem drahtlosen Kommunikationsnetzwerk zur Ressourcenplanung und Planer für ein drahtloses Kommunikationsnetzwerk
Procédé dans un réseau de communication sans fil pour réaliser la planification des ressources et planificateur pour un réseau de communication sans fil

(43) Date of publication of application: 30.12.2009
(73) Proprietor: ALCATEL LUCENT, 92100 Boulogne-Billancourt (FR)
(72) Inventor: Schönerstedt, Lutz, 71634 Ludwigsburg (DE)
(74) Representative: Kleinbub, Oliver

(56) References cited:
- US-A1- 2007 058 583
- ISHIKAWA Y ET AL: "AN ADAPTIVE CHANNEL ALLOCATION STRATEGY USING MULTIPLE OVERLAID PRIORITY FOR CELLULAR SYSTEMS" ELECTRONICS & COMMUNICATIONS IN JAPAN, PART I - COMMUNICATIONS, WILEY, HOBOKEN, NJ, US, vol. 80, no. 2, 1 February 1997 (1997-02-01), pages 90-99, XP000689841 ISSN: 8756-6621

## Description

### BACKGROUND OF THE INVENTION

The present invention relates to a method in a wireless communication network to perform scheduling of resources out of a set of resources for use by a set of user equipments. The invention further relates to a scheduler for a wireless communication network.

In a wireless communication network, e. g. a cellular system, a set of user equipments is served by one base station. The base station schedules resources out of a set of resources for communication with the set of user equipments. User equipments are sometimes also called mobiles, mobile units or mobile user equipments.

The performance of such wireless network is limited by interference from neighbouring base stations and/or user equipments in neighbouring cells. The neighbouring base stations also allocate resources out of said set of resources.

An example for such a wireless communication network is an OFDM system (Orthogonal Frequency Division Multiplex system).

In the patent application US 2007/0058583 A1, a method for allocating resources based on calculating a priority value for each mobile station is disclosed. The resource allocation method is divided into a process of ordering a resource allocation order depending on the priority value of the mobile stations, and a process of allocating sub-carriers for each mobile station in the resource allocation order. In addition, resources are preferably allocated to the mobile station satisfying a priority threshold.

It has been proposed to limit the fraction of the set of resources that is used by a base station. This scheme is sometimes referred to as a fractional re-use scheme. In fractional re-use schemes only a fraction of the set of resources available at a base station is allocated by the base station for use by a set of user equipments. This corresponds to a limitation of the allocated band width in e. g. an OFDM system. This improves performance especially in a loaded and/or dense wireless communication network.

Such a static or semi static fractional re-use scheme produces interference by transmitting some resources with reduced power or disabling some resources. The reduction of power or the disabling of resources can for example be dependent on the so-called colour code of a base station. During network planning base stations with the same colour code are then placed as far as possible from each other.

### OBJECT OF THE INVENTION

The object of the invention is to increase performance in a wireless communication network.

### SUMMARY OF THE INVENTION

These objects and others that appear below are achieved by a method to perform scheduling of resources out of a set of resources for use by a set of user equipments and a scheduler to perform scheduling of resources out of a set of resources for use by a set of user equipments according to the independent claims. Features of preferred embodiments of the invention are subject matter of the dependent claims.

A base station in a wireless communication network has a set of resources which it can be allocated to a set of user equipments. The resources of the set of resources are for communication in-between the base station and the user equipments within the set of user equipments. Resources might for example be codes in a code division multiple access system or frequencies in for example an OFDM system.

For each resource in the set of resources the priority of use for each user equipment in the set of user equipments is calculated by a scheduler. The calculation of the priority of use for each user equipment for each resource is done on a per cycle basis. At each cycle of scheduling the priority of use for each user equipment for each resource is newly calculated. A cycle of scheduling is for example 1 ms for Long Term Evolution Frequency Division Duplex (LTE/FDD) systems. Said calculation of the priority of use for each user equipment in the set of user equipments for each resource in the set of resources is for example based on a relative quality estimation of a resource taking into account for example a channel quality indicator (CQI) value.. In retransmission systems, for example HARQ systems, for a user equipment that has to retransmit data, this can influence the priority of use in order to enable this user equipment to have a preferred priority of use and to be able to be allocated a resource with high priority.

The base station then allocates according to the inventive method resources out of the set of resources to user equipments out of the set of user equipments. For a user equipment that is allocated a resource the priority of use for the user equipment for said resource has been calculated to be above a predefined threshold priority level.

This allows for fractional allocations of the resources in the set of resources in a dynamic way. When allocating only user equipments which priorities for the resource are above a certain predefined threshold level then by adjusting said threshold level the fraction of use of the whole set of resources can be adjusted.

According to a preferred embodiment of the invention the resources in the set of resources are orthogonal resources. Orthogonal resources are for example frequencies in an OFDM system. Sub carriers in an OFDM system are orthogonal to each other and thus do not interfere with each other. This allows for a better use of the available spectrum. As base stations serving the cells of a wireless communication network use the same frequency spectrum in orthogonal frequency division multiplex systems the network performance is limited by interference from neighbouring cells. The invention provides for a method and scheduler to apply a fractional re-use of the available spectrum which can be applied dynamically and thus reduces interference in-between the cells.

According to a preferred embodiment of the invention the predefined threshold priority level is calculated before allocation of a resource. The calculation of a predefined threshold priority level can then for example be performed depending on the fraction of bandwidth that is to be used by the resources. If a higher percentage of the resources is to be used then another threshold level can be calculated. By this the fraction of the resources that is to be used by one base station can be dynamically adapted independently of other base stations and/or independently of the overall network planning.

According to a preferred embodiment of the invention the allocation step comprises ordering the set of user equipments in an ordered list according to the calculated priority of use for all user equipments in said set of user equipments. The allocation is then performed following said ordered list starting the allocation of the resource and user equipment with the highest overall priority of use. The allocation is then performed following the list with the overall priority of use in descending order until the required fraction of resources is allocated. This gives a simple and efficient way to achieve a fraction of usage of the resources which is smaller than one, thus leading to a fractional use of the overall resources.

According to another preferred embodiment of the invention the calculation of the predefined threshold priority level depends upon the fraction of the band width that are offered by the resources to be used. In this embodiment of the invention the set of resources offers communication capacity of a certain band width and it is required that only a fraction of said band width to be used. The calculation of the predefined threshold priority level is then performed depending on the fraction of said band width to be used.

According to a preferred embodiment of the invention the user equipments out of the set of user equipments that are allocate a certain resource have a priority of use for the allocated resource that is the highest for said ceartain resource in the set of user equipments. For example, in an embodiment of the invention an ordered list with calculated priorities of use for the user equipments is used, the user equipment is allocated to a certain resource if the respective priority of use of the user equipment for said resource is the highest in the ordered list of priorities of use.

In a further preferred embodiment of the invention an iterative approach of allocating resources to user equipments is used. According to this embodiment user equipments are allocated a resource if the user equipments require a quantity of resources that have not yet be completely allocated to them. Additionally the priority of use for each of the user equipments that are allocated a resource in this iteration step is the highest for said resource to be allocated in the set of user equipments. The iteration can for example be performed in the following way. In the first round of allocation the user equipments are assigned resources that have the highest respective priority of use for the resources to be allocated. In a second round of iteration only those user equipments are assigned additional resources that require resources that have not yet been completely allocated. For those user equipments still requiring resources those user equipments are allocated a resource that have the highest respective priority of use for the respective resource. The iteration can be continued with further steps until all the user equipments have been allocated resources that they need and/or until the required fractional use threshold level is reached. In the second and further round of above mentioned iteration resources can then be assigned to user equipments if the respective user equipment has for example the second highest priority of use for a certain resource. This is for example the case if the user equipment with the highest priority of use for a certain resource has already been allocated all resources it needs in a previous step of allocation of the iterative process.

According to a preferred embodiment of the invention, a mobile calculates second priorities of use, which define the priority a certain resource has for this mobile. In the score table the mobile is only inserted in resources where said second priority of use is above a second predefined threshold. By this a fractional use of resources can also be achieved.

A scheduler for a wireless communication network performs the scheduling of resources out of a set of resources for use by a set of user equipments. The set of resources is for communication of a base station to and from said set of user equipments. The scheduler comprises means for calculating for each resource in said set of resources the priority of use for each user equipment in said set of user equipments. The scheduler further comprises means for allocating the resources in the set of resources to the user equipments for which the respective priority of use is above a pre-defined threshold priority level. The scheduler is thus adapted to perform above mentioned method in a wireless communication network to perform scheduling of resources.

The invention further concerns a base station for a wireless communication network which comprises an inventive scheduler. The scheduler performs scheduling and allocation of resources out of a set of resources for use by a set of user equipments. The resources are for communication in-between the base station and said user equipments.

### BRIEF DESCRIPTION OF THE DRAWINGS

Other characteristics and advantages of the invention will become apparent in the following detailed description of preferred embodiments of the invention illustrated by the accompanying drawings given by means of non limiting illustrations.
Figure 1 shows an overview of a wireless communication network,
Figure 2 shows an overview of a method for scheduling resources, and
Figure 3 shows an overview over a base station comprising a scheduler.

### DETAILED DESCRIPTION OF THE INVENTION

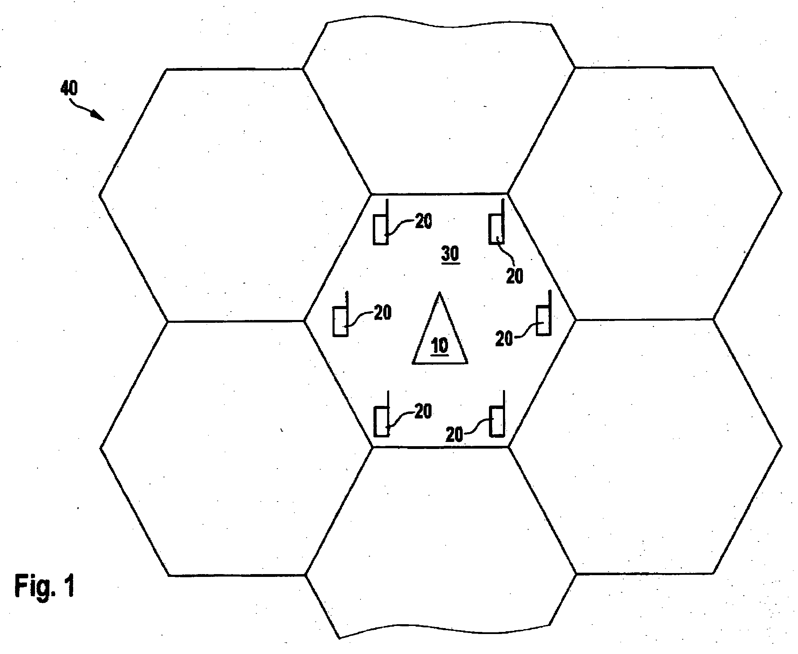

Figure 1 shows an overview of an example of a wireless communication network 40. The wireless communication network 40 comprises cells 30, each cell 30 being served by a base station 10. The base station 10 serves user equipments 20 within its associated cell 30.

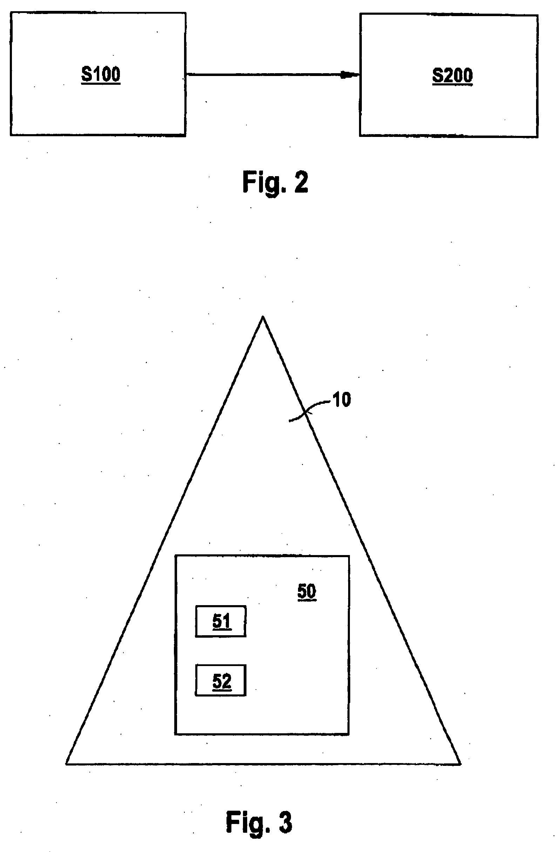

Figure 2 shows an overview of a method in a wireless communication network 40 to perform scheduling of resources out of a set of resources for use by a set of user equipments 20. The set of resources is for communication of a base station 10 to and from said set of user equipments 20. The method comprises a step S100 calculating for each resource in the set of resources the priority of use for each user equipment 20. The method further comprises a step S200 allocating resources out of said set of resources to user equipments 20. The priority of use for the user equipment 20 that are allocated a resource is above a pre-defined threshold priority level.

Figure 3 shows a schematic overview of a base station 10 comprising a scheduler 50 for scheduling of resources for use by user equipments 20. The scheduler comprises means 51 for calculating for each resource in the set of resources the priority of use for each user equipment 20. The scheduler 50 further comprises means 52 for allocating the resources in the set of resources to the user equipments 20 for which the prospective priority of use is above a pre-defined threshold priority level.

In step S100 of the method a scheduler 50 creates a so-called score table with priorities per resource at one allocation cycle. The following table 1 gives an example of a score table.

**Table 1**

| **Resource** | **Priorities per resource (Highest left, lowest)** | | | | | | | |
|---|---|---|---|---|---|---|---|---|
| **1** | **8**.**5** | 7.2 | 5.7 | 4.7 | 4.5 | 3.1 | 2.4 | 2.1 |
| | UE 3 | UE 5 | UE | UE 4 | UE 2 | UE 1 | UE 8 | UE 6 |
| **2** | **8.6** | 8.6 | 8.1 | 7.7 | 6.6 | 4.8 | 3.2 | 0.5 |
| | UE 1 | UE 5 | UE 6 | UE 7 | UE 4 | UE 3 | UE 8 | UE 2 |
| 3 | **8.1** | 8.0 | 6.3 | 5.2 | 5.2 | 3.5 | 3.5 | 2.0 |
| | UE E | UE 6 | UE 1 | UE 3 | UE 7 | UE 4 | UE 2 | UE 8 |
| **4** | **9.9** | 9.4 | 8.9 | 8.8 | 7.9 | 4.7 | 4.6 | 1.1 |
| | UE 3 | UE 5 | UE 7 | UE 4 | UE 2 | UE 1 | UE 8 | UE 6 |
| **5** | **8.9** | 6.5 | 5.6 | 5.0 | 4.2 | 0.9 | 0.7 | 0.1 |
| | UE 2 | UE 4 | UE 8 | UE 5 | UE 3 | UE 7 | UE 6 | UE 1 |
| **6** | **9.6** | 8.9 | 8.1 | 6.5 | 5.3 | 4.4 | 4.2 | 3.1 |
| | UE 1 | UE 2 | UE 7 | UE 4 | UE 8 | UE 5 | UE 3 | UE 6 |
| **7** | **8.5** | 8.5 | 7.2 | 4.5 | 3.6 | 2.2 | 2.0 | 1.9 |
| | UE 6 | UE 2 | UE 3 | UE 4 | UE 8 | UE 5 | UE 7 | UE 1 |
| **8** | **7.9** | 7.8 | 6.0 | 4.6 | 3.4 | 3.3 | **3.1** | 1.3 |
| | UE 4 | UE 2 | UE 7 | UE 1 | UE 6 | UE 8 | UE 5 | UE 3 |
| **9** | **9.6** | 8.5 | 8.4 | 3.9 | 3.1 | 2.4 | 1.2 | 0.2 |
| | UE 4 | UE 8 | UE 6 | UE 7 | UE 3 | UE 1 | UE 5 | UE 2 |
| **10** | **9.9** | 9.5 | 9.2 | 8.9 | 7.5 | 6.8 | 4.6 | 0.1 |
| | UE 7 | UE 8 | UE 3 | UE 2 | UE 5 | UE 4 | UE 1 | UE 6 |

In this example, a higher number priority is a better or a preferred priority. Shown in table 1 are resources 1 to 10 and priorities for per resource for user equipments UE1 to UE8. In the example shown different mobiles have to be scheduled for different priorities 1 to 10. For each mobile in step S100 one priority of use per resource has been calculated. The priority of use for user equipment UE3 for resource 1 in this example is 8.5. The priority of use for user equipment UE1 for resource 1 is 3.1. So in the above shown score table for each resource there are priorities for each user equipment. The highest priority of use per resource is the one with the highest priority of use among the different ad user equipments UE1 to UE8. In table 1 shown above the resulting highest priority of use is shown in left hand column in bold character and shaded background. In the example shown above the highest priority of use for resource 1 is 8.5 for user equipment UE3, the highest priority of use for resource 2 is 8.6 for user equipment UE1 and so on.

As a summary the highest priorities of use for table 1 are shown in table 2 below.

**Table 2**

| | | | | | | | | | | |
|---|---|---|---|---|---|---|---|---|---|---|
| **Resource** | 1 | 2 | 3 | 4 | 5 | 6 | 7 | 8 | 9 | 10 |
| **Priority** | 8.5 | 8.6 | 8.1 | 9.9 | 8.9 | 9.6 | 8.5 | 7.9 | 9.6 | 9.9 |
| **UE** | 3 | 1 | 5 | 3 | 2 | 1 | 6 | 4 | 4 | 7 |

Priorities of use for the different user equipments are calculated using general conditions in-between the base station 10 and the user equipment 20 and the quality of service requirement of the user equipment 20. In retransmission systems, e. g. HARQ systems, the requirement of a retransmission can also influence the priority of use in order to assure that retransmission needs are served with high priority.

Shown in the following table 3 are the highest priorities of use said corresponding resources and user equipments as in table 2 above. Shown shaded in table 3 are priorities of use which are above or equal a priority threshold level 8.6. Allocation in this example is done for the shaded user equipments. They are allocated the resources in the same column.

**Table 3**

| | | | | | | | | | | |
|---|---|---|---|---|---|---|---|---|---|---|
| **Resource** | 1 | 2 | 3 | 4 | 5 | 6 | 7 | 8 | 9 | 10 |
| **Priority** | 8.5 | 8.6 | 8.1 | 9.9 | 8.9 | 9.6 | 8.5 | 7.9 | 9.6 | 9.9 |
| **UE** | 3 | 1 | 5 | 3 | 2 | 1 | 6 | 4 | 4 | 7 |

For the resources shown in table 3 above resource 1, resource 3, resource 7, and resource 8 no user equipments are assigned. Assigned are only user equipments to resources which have a corresponding priority of use which is above the priority threshold level of 8.6 in this example. This leads to a fractional use of the resources which uses only 6 out of 10 resources. The resources which are allocated in the example given in table 3 are the resources resource 2, resource 4, resource 5, resource 6, resource 9, and resource 10 a user equipment assigned to these resources are the user equipments user equipment UE1, user equipment UE2, user equipment UE3, user equipment UE4, and user equipment UE7. If in this case each resource uses the same bandwidth only 60 % of the overall bandwidth would be used in this example, as 6 out of 10 resources are allocated.

In a further embodiment of the invention the priority threshold level can be calculated according to the percentage of the resources to be used. For the example given in tables 1 to 3 with the percentage to be used of 60 % and the number of all resources 10 the resulting priority threshold level would be 8.6 as given in the example above. When trying to limit the number of used resources to 70 % thus to 7 the priority threshold level would be in-between 8.5 and 8.6. An example with the priority threshold level of 8.5 is given in the following table 4.

**Table 4**

| | | | | | | | | | | |
|---|---|---|---|---|---|---|---|---|---|---|
| **Resource** | 1 | 2 | 3 | 4 | 5 | 6 | 7 | 8 | 9 | 10 |
| **Priority** | 8.5 | 8.6 | 8.1 | 9.9 | 8.9 | 9.6 | 8.5 | 7.9 | 9.6 | 9.9 |
| **UE** | 3 | 1 | 5 | 3 | 2 | 1 | 6 | 4 | 4 | 7 |

In this example of table 4 given above the columns with a priority of use which is higher or equal to 8.5 are shaded.

When comparing table 3 and 4 it can be seen that with a priority threshold level of 8.6 six resources out of 10 would be used and a priority threshold level corresponding to 8.5 eight resources would be used.

In order to allocate exactly 7 resources out of 10 resources the columns of table 2 could be re-ordered in an order with descending priorities of use. This would lead to the following table 5

**Table 5**

| | | | | | | | | | | |
|---|---|---|---|---|---|---|---|---|---|---|
| **Resource** | 4 | 10 | 6 | 9 | | 2 | 7 | 1 | 3 | 8 |
| **Priority** | 9.9 | 9.9 | 9.6 | 9.6 | 8.9 | 8.6 | 8.5 | 8.5 | 8.1 | 7.9 |
| **UE** | 3 | 7 | 1 | 4 | 2 | 1 | 6 | 3 | 5 | 4 |

From the columns ordered in this way as shown above the first 7 user equipments shown in the list in the first 7 columns could be allocated their corresponding resource as shown in the same column. This would lead to allocated resources resource 2, resource 4, resource 5, resource 6, resource 7, resource 9, and resource 10 and user equipments that are allocated a resource would be user equipment UE1, user equipment UE2, user equipment UE3, user equipment UE4, user equipment UE6, and user equipment UE7. User equipment UE1 would then be allocated to 2 resources namely resource 2 and 6.

According to a further embodiment of the invention one is able to reduce the number of scheduled user equipments in the example. Table 6 shows an example with a priority threshold level of 8.5 and a reduced number of scheduled user equipments.

**Table 6**

| | | | | | | | | | | |
|---|---|---|---|---|---|---|---|---|---|---|
| **Resource** | 4 | 10 | 6 | 9 | 5 | 2 | 1 | 7 | 3 | 8 |
| **Priority** | 9.9 | 9.9 | 9.6 | 9.6 | 8.9 | 8.6 | 8.5 | 8.5 | 8.1 | 7.9 |
| **UE** | 3 | 7 | 1 | 4 | 2 | 1 | 3 | 6 | 5 | 4 |

Shown in bold in table 6 is user equipment UE3 in the column of resource 1 with the priority of use 8.5. In this example column of resources 1 and 7 have changed places with respect to table 5. Shown in shaded are again the first seven columns of resources so the number of allocated resources is 7, namely resource 1, resource 2, resource 4, resource 5, resource 6, resource 9, resource 10. In contrast to the example given in table 5 only five user equipments are allocated resources in this example, namely user equipment 1, 2, 3, 4, and 6.

In a further embodiment of the invention, retransmission requirements of a user equipment, e. g. in HARQ systems, can also be taken into account by allocating resources first to user equipments with retransmission needs and then allocating the remaining resources according to a score table and a priority threshold as mentioned above. This would serve the user equipments with retransmission needs first.

In further preferred embodiments of the invention more restrictions can optionally to be taken into account during the resource allocation. In an example where a user equipment does not need to get all the resources which would be normally allocated for this user equipment if the priorities of use are above a priority threshold level. In this case the resources could be assigned to another user equipment which would change the allocated resources to the user equipments. In this example the priority threshold level as described above could be applied in an iterative way. This would mean that in a first step resources with a corresponding priority of use for a corresponding user equipment would be assigned if the priority of use is above the priority threshold level and the user equipments have not yet been assigned all the resources they need. If in a second round user equipments remain that require a resource and resources remain to be allocated the resources are allocated to the user equipments that have still resource requirements and have the highest priority of use in a list that contains all the priorities of use of user equipments that still have resource requirements. In this list the user equipments which do not need resources to be allocated any more have been deleted. The procedure could also be done in a non-iterative way by just taking the second user equipment with the second highest priority of use if the first place with the user equipment with the highest priority of use does not need any more resources to be allocated.

According to another embodiment of the invention the priority threshold level could be calculated dynamically. For example the priority threshold level could be calculated depending on the highest priority of use within the score table of table 1. Then the priority threshold level could be calculated to be a fraction of the highest priority of use as calculated for the set of user equipments for the set of resources. The fraction could for example be 10 %.

According to a further embodiment of the invention fixed and dynamic priority threshold levels can be combined. The priority threshold level can then for example be the greater of a fixed and dynamic priority threshold level, the inferior of a fixed and dynamic priority threshold level, the mean of both the fixed and dynamic priority threshold level. It is also possible to calculate a weighted mean of fixed and dynamic priority threshold level to calculate the priority threshold level to be applied.

Several thresholds can also be applied to one score table. Different thresholds then give different user equipments to be allocated and a choice can be made in between these different results. It's also possible to choose different thresholds, e.g. a certain percentage of usage of resources, a certain percentage of usage of bandwidth, a certain number of user equipments to be served etc., and to calculate a resulting threshold, e. g. highest, lowest, average etc., which is to be applied to the score table.

The invention can also be further developed to calculate different score tables as for example shown in table 1. Different score tables could for example be calculated for different priority calculations, e. g. priorities depending more on service requirements versus priorities depending more on channel quality in-between base station and user equipment. For the allocation the user equipments to resources different priority threshold levels could be used and then different assigned user equipments to resources would result. It would then be possible to combine the different score tables to obtain the overall allocation of resources to user equipments. A combination of different score tables would for example be the intersection of all the different score tables, meaning that only resources are assigned to user equipments that would be assigned in all the score tables. Another possibility would be to be take the union of the different score tables and assign any resource to the user equipments that would be assigned in any score table.

When actually scheduling resources, preferably one score table is calculated using the resources that have been identified as described in the paragraph above. Scheduling will then be performed using said one calculated score table.

## Claims

1. Method in a wireless communication network (40) to perform scheduling of resources out of a set of resources for use by a set of user equipments (20), the set of resources being for communication of a base station (10) to and from said set of user equipments (20), **characterized in, that** the method comprises
calculating for each resource in said set of resources the resource-dependent priority of use for each user equipment (20) in said set of user equipments (20), allocating resources out of said set of resources to user equipments (20) out of said set of user equipments (20), the resource-dependent priority of use for the user equipments (20) that are allocated a resource being above a predefined threshold priority level.

2. Method according to claim 1, **characterized in that**
the resources in the set of resources are orthogonal resources.

3. Method according to claim 1 or 2, **characterized by**
calculating the predefined threshold priority level before allocation of the resources.

4. Method according to claim 3, **characterized by**
the calculation of the predefined threshold priority level depending on
the required fraction of resources in the set of resources to be used.

5. Method according to claim 4, **characterized by**
the allocation step comprising ordering the set of user equipments (20) in an or-dered list according to the calculated resource-dependent priority of use for all user equipments (20) in said set of user equipments (20) and performing the allocation following said ordered list starting with the allocation of the resource and user equipment (20) with the highest overall resource-dependent priority of use and performing the allocation until the required fraction of resources is allocated.

6. Method according to claim 3, **characterized by**
the set of resources offering communication capacity of a certain bandwidth and
the calculation of the predefined threshold priority level depending on the fraction of said bandwidth to be used.

7. Method according to one of the previous claims, further comprising
allocating resources out of said set of resources to user equipments (20) out of said set of user equipments (20), the resource-dependent priority of use for each of the user equipments (20) that are allocated a resource being the highest for said resource in the set of user equipments (20).

8. Method according to one of the claims 1 to 6, further comprising
allocating resources out of said set of resources to user equipments (20) out of said set of user equipments (20), the user equipments (20) that are allocated a resource requiring a quantity of resources that have not yet been completely allocated to them and the resource-dependent priority of use for each of the user equipments (20) that are allocated a resource being the highest for said resource in the set of user equipments (20).

9. Method according to claim 0, further comprising
allocating the resources that ore not assigned to the user equipment (20) with the respective highest resource-dependent priority of use to the user equipment (20) with the second highest resource-dependent priority of use, provided that said second highest resource-dependent priority of use is above said predefined threshold priority level.

10. Method according to one of the claims 1 to 0, **characterized by**
said user equipments calculating a second resource-dependent priority of use for each resource out of the set of resources,
allocating resources to a user equipment if said second resource-dependent priority of use is above a predefined second priority threshold level.

11. Scheduler (50) for a wireless communication network (40) to perform scheduling of resources out of a set of resources for use by a set of user equipments (20), the set of resources being for communication of a base station (10) to and from said set of user equipments (20), **characterized in, that** the scheduler (50) comprises means for calculating (51) for each resource in said set of resources the resource-dependent priority of use for each user equipment (20) in said set of user equipments (20), means for allocating (52) the resources in the set of resources to the user equipments (20) for which the respective resource-dependent priority of use is above a predefined threshold priority level.

12. Base station (10) for a wireless communication network (40) comprising a scheduler (50) according to claim 11.

## Patentansprüche

1. Verfahren in einem drahtlosen Kommunikationsnetzwerk (40) zur Planung von Ressourcen aus einer Gruppe von Ressourcen für die Nutzung durch eine Gruppe von Teilnehmergeräten (20), wobei die Gruppe von Ressourcen für die Kommunikation einer Basisstation (10) zu und von der besagten Gruppe von Teilnehmergeräten (20) dient, **dadurch gekennzeichnet, dass** das Verfahren für jede Ressource in der besagten Gruppe von Ressourcen das Berechnen der ressourcenabhängigen Nutzungspriorität für jedes Teilnehmergerät (20) in der besagten Gruppe von Teilnehmergeräten (20), das Zuweisen von Ressourcen aus der besagten Gruppe von Ressourcen zu Teilnehmergeräten (20) aus der besagten Gruppe von Teilnehmergeräten (20) umfasst, wobei die ressourcenabhängige Nutzungspriorität für die Teilnehmergeräte (20), denen eine Ressource zugewiesen wird, über einem vorausdefinierten Prioritätsgrenzwert liegt.

2. Verfahren nach Anspruch 1, **dadurch gekennzeichnet, dass** die Ressourcen in der Gruppe von Ressourcen orthogonale Ressourcen sind.

3. Verfahren nach Anspruch 1 oder 2, **gekennzeichnet durch** Berechnen des vorausbestimmten Prioritätsgrenzwerts vor Zuweisung der Ressourcen.

4. Verfahren nach Anspruch 3, **gekennzeichnet durch** die Berechnung des vorausbestimmten Prioritätsgrenzwerts je nach erforderlichem Ressourcenanteil in der Gruppe von zu nutzenden Ressourcen.

5. Verfahren nach Anspruch 4, **dadurch gekennzeichnet, dass** der Zuweisungsschritt das Reihen der Gruppe von Teilnehmergeräten (20) in einer gereihten Liste nach der berechneten ressourcenabhängigen Nutzungspriorität für alle Teilnehmergeräte (20) in der besagten Gruppe von Teilnehmergeräten (20) und das Durchführen der Zuweisung gemäß der besagten gereihten Liste beginnend mit der Zuweisung der Ressource und des Teilnehmergeräts (20) mit der insgesamt höchsten ressourcenabhängigen Nutzungspriorität und das Durchführen der Zuweisung, bis der erforderliche Ressourcenanteil zugewiesen ist, umfasst.

6. Verfahren nach Anspruch 3, **dadurch gekennzeichnet, dass** die Gruppe von Ressourcen eine Kommunikationskapazität einer bestimmten Bandbreite anbietet und
die Berechnung des vorausdefinierten Prioritätsgrenzwerts vom Anteil der besagten zu nutzenden Bandbreite abhängt.

7. Verfahren nach einem beliebigen der vorstehenden Ansprüche, weiterhin umfassend das Zuweisen von Ressourcen aus der besagten Gruppe von Ressourcen zu Teilnehmergeräten (20) aus der besagten Gruppe von Teilnehmergeräten (20), wobei die ressourcenabhängige Nutzungspriorität für jedes der Teilnehmergeräte (20), denen eine Ressource zugewiesen wird, die höchste für besagte Ressource in der Gruppe von Teilnehmergeräten (20) ist.

8. Verfahren nach einem beliebigen der Ansprüche 1 bis 6, weiterhin umfassend das Zuweisen von Ressourcen aus der besagten Gruppe von Ressourcen zu Teilnehmergeräten (20) aus der besagten Gruppe von Teilnehmergeräten (20), wobei die Teilnehmergeräte (20), denen eine Ressource zugewiesen wird, eine Menge von Ressourcen erfordern, die ihnen noch nicht vollständig zugewiesen wurden, und die ressourcenabhängige Nutzungspriorität für jedes der Teilnehmergeräte (20), denen eine Ressource zugewiesen wird, die höchste für besagte Ressource in der Gruppe von Teilnehmergeräten (20) ist.

9. Verfahren nach Anspruch 8, weiterhin umfassend das Zuweisen der Ressourcen, die nicht dem Teilnehmergerät (20) mit der jeweils höchsten ressourcenabhängigen Nutzungspriorität zugewiesen sind, zu dem Teilnehmergerät (20) mit der zweithöchsten ressourcenabhängigen Nutzungspriorität, unter der Voraussetzung, dass besagte zweithöchste ressourcenabhängige Nutzungspriorität über dem besagten vorausdefinierten Prioritätsgrenzwert liegt.

10. Verfahren nach einem beliebigen der Ansprüche 1 bis 9, **dadurch gekennzeichnet, dass** besagte Teilnehmergeräte eine zweite ressourcenabhängige Nutzungspriorität für jede Ressource aus der Gruppe von Ressourcen berechnen, Ressourcen einem Teilnehmergerät zugewiesen werden, wenn besagte zweite ressourcenabhängige Nutzungspriorität über einem vorausdefinierten zweiten Prioritätsgrenzwert liegt.

11. Planer (50) für ein drahtloses Kommunikationsnetzwerk (40) zur Planung von Ressourcen aus einer Gruppe von Ressourcen für die Nutzung durch eine Gruppe von Teilnehmergeräten (20), wobei die Gruppe von Ressourcen für die Kommunikation einer Basisstation (10) zu und von der besagten Gruppe von Teilnehmergeräten (20) dient, **dadurch gekennzeichnet, dass** der Planer (50), für jede Ressource in der besagten Gruppe von Ressourcen, Mittel zum Berechnen (51) der ressourcenabhängigen Nutzungspriorität für jedes Teilnehmergerät (20) in der besagten Gruppe von Teilnehmergeräten (20), Mittel zum Zuweisen (52) der Ressourcen in der Gruppe von Ressourcen zu den Teilnehmergeräten (20) umfasst, für welche die jeweilige ressourcenabhängige Nutzungspriorität über einem vorausdefinierten Prioritätsgrenzwert liegt.

12. Basisstation (10) für ein drahtloses Kommunikationsnetzwerk (40), umfassend einen Planer (50) nach Anspruch 11.

## Revendications

1. Procédé dans un réseau de communication sans fil (40) pour réaliser la planification de ressources parmi un ensemble de ressources devant être utilisées par un ensemble d'équipements utilisateurs (20), l'ensemble de ressources servant à la communication d'une station de base (10) vers et à partir dudit ensemble d'équipements utilisateurs (20), **caractérisé en ce que** le procédé comprend le calcul pour chaque ressource parmi ledit ensemble de ressources de la priorité d'utilisation en fonction des ressources pour chaque équipement utilisateur (20) parmi ledit ensemble d'équipements utilisateurs (20), l'attribution de ressources parmi ledit ensemble de ressources aux équipements utilisateurs (20) parmi ledit ensemble d'équipements utilisateurs (20), la priorité d'utilisation en fonction des ressources pour les équipements utilisateurs (20) auxquels on attribue une ressource étant supérieure à un niveau de priorité seuil prédéfini.

2. Procédé selon la revendication 1, **caractérisé en ce que** les ressources parmi l'ensemble de ressources sont des ressources orthogonales.

3. Procédé selon la revendication 1 ou 2, **caractérisé par** le calcul du niveau de priorité seuil prédéfini avant l'attribution des ressources.

4. Procédé selon la revendication 3, **caractérisé par** le calcul du niveau de priorité seuil prédéfini en fonction de la fraction de ressources requise parmi l'ensemble de ressources devant être utilisées.

5. Procédé selon la revendication 4, **caractérisé en ce que** l'étape d'attribution comprend le classement de l'ensemble d'équipements utilisateurs (20) dans une liste ordonnée conformément à la priorité d'utilisation en fonction des ressources calculée pour tous les équipements utilisateurs (20) parmi ledit ensemble d'équipements utilisateurs (20) et la réalisation de l'attribution en fonction de ladite liste ordonnée en commençant par l'attribution de la ressource et avec l'équipement utilisateur (20) ayant la priorité d'utilisation en fonction des ressources globale la plus élevée et la réalisation de l'attribution jusqu'à ce que la fraction de ressources requise soit attribuée.

6. Procédé selon la revendication 3, **caractérisé en ce que** l'ensemble de ressources offre une capacité de communication d'une certaine bande passante et
le calcul du niveau de priorité seuil prédéfini dépend de la fraction de ladite bande passante devant être utilisée.

7. Procédé selon l'une des revendications précédentes, comprenant en outre l'attribution de ressources parmi ledit ensemble de ressources aux équipements utilisateurs (20) parmi ledit ensemble d'équipements utilisateurs (20), la priorité d'utilisation en fonction des ressources pour chacun des équipements utilisateurs (20) auxquels on attribue une ressource étant la plus élevée pour ladite ressource dans l'ensemble d'équipements utilisateurs (20).

8. Procédé selon l'une des revendications 1 à 6, comprenant en outre l'attribution de ressources parmi ledit ensemble de ressources aux équipements utilisateurs (20) parmi ledit ensemble d'équipements utilisateurs (20), les équipements utilisateurs (20) auxquels on attribue une ressource nécessitant une quantité de ressources qui ne leur ont pas été complètement attribuées et la priorité d'utilisation en fonction des ressources pour chacun des équipements utilisateurs (20) auxquels on attribue une ressource étant la plus élevée pour ladite ressource dans l'ensemble d'équipements utilisateurs (20).

9. Procédé selon la revendication 8, comprenant en outre l'attribution des ressources qui ne sont pas attribuées à l'équipement utilisateur (20) ayant la priorité d'utilisation en fonction des ressources la plus élevée respective à l'équipement utilisateur (20) ayant la deuxième priorité d'utilisation en fonction des ressources la plus élevée, à condition que ladite deuxième priorité d'utilisation en fonction des ressources la plus élevée soit supérieure audit niveau de priorité seuil prédéfini.

10. Procédé selon l'une des revendications 1 à 9, **caractérisé en ce que** lesdits équipements utilisateurs calculent une deuxième priorité d'utilisation en fonction des ressources pour chaque ressource parmi l'ensemble de ressources, l'attribution de ressources à un équipement utilisateur si ladite deuxième priorité d'utilisation en fonction des ressources est supérieure à un deuxième niveau de priorité seuil prédéfini.

11. Planificateur (50) pour un réseau de communication sans fil (40) destiné à réaliser la planification de ressources parmi un ensemble de ressources devant être utilisées par un ensemble d'équipements utilisateurs (20), l'ensemble de ressources servant à la communication d'une station de base (10) vers et à partir dudit ensemble d'équipements utilisateurs (20), **caractérisé en ce que** le planificateur (50) comprend des moyens pour calculer (51), pour chaque ressource parmi ledit ensemble de ressources, la priorité d'utilisation en fonction des ressources pour chaque équipement utilisateur (20) parmi ledit ensemble d'équipements utilisateurs (20), des moyens pour attribuer (52) les ressources parmi l'ensemble de ressources aux équipements utilisateurs (20) pour lesquels la priorité d'utilisation en fonction des ressources respective est supérieure à un niveau de priorité seuil prédéfini.

12. Station de base (10) pour un réseau de communication sans fil (40) comprenant un planificateur (50) selon la revendication 11.
